# FASCICULE DE BREVET EUROPEEN

(11) **EP 3 219 562 B1**
(45) Date de publication et mention de la délivrance du brevet: **02.04.2025**
(21) Numéro de dépôt: 17153053.8
(22) Date de dépôt: 25.01.2017
(51) Int. Cl.: B60W 10/06, B60W 10/08, B60W 30/20, B60W 20/15, B60W 50/00

(54) **SYSTÈME ET PROCÉDÉ DE CORRECTION D'OSCILLATIONS DE COUPLE DANS UNE TRANSMISSION D'UN VÉHICULE AUTOMOBILE À PROPULSION HYBRIDE**
SYSTEM UND VERFAHREN ZUR KORREKTUR VON DREHMOMENTSCHWANKUNGEN IN EINEM GETRIEBE EINES KRAFTFAHRZEUGS MIT HYBRIDANTRIEB
SYSTEM AND METHOD FOR CORRECTING TORQUE OSCILLATIONS IN A TRANSMISSION OF A MOTOR VEHICLE WITH HYBRID PROPULSION

(30) Priorité: 15.03.2016 FR 1652186
(43) Date de publication de la demande: 20.09.2017
(73) Titulaire: Ampere SAS, 92100 Boulogne-Billancourt (FR)
(72) Inventeur: LE ROY, Loïc, 91370 Verrieres le Buission (FR); RUEL, Jean-Martin, 91360 Epinay sur Orge (FR)
(74) Mandataire: Renault Group

(56) Documents cités:
- WO-A1-2014/106709
- WO-A1-2014/108620
- FR-A1- 2 875 545
- FR-A1- 3 000 524
- FR-A1- 3 000 993

## Description

La présente invention concerne le domaine des véhicules automobiles à propulsion hybride comprenant au moins deux sources d'énergie différentes, et plus précisément les véhicules automobiles comprenant d'une part, un moteur thermique et d'autre part, au moins une machine électrique.

Plus particulièrement, la présente invention concerne les systèmes et procédé d'atténuation ou de correction des oscillations générées dans une transmission hybride.

L'intérêt des transmissions hybrides est de fournir deux sources d'énergies, thermique et électrique, à la chaîne cinématique d'entraînement du véhicule. Les apports de couple de ces deux énergies peuvent se cumuler dans un mode dit « hybride » ou peuvent être utilisés séparément, soit dans un mode dit « thermique pur » où la machine électrique ne fournit pas de couple à la chaîne de traction, soit dans un mode dit « électrique pur », où le moteur thermique ne fournit pas de couple à la chaîne de traction.

Les transmissions hybrides permettent d'entraîner le moteur thermique à l'arrêt ou en roulage en utilisant la machine électrique comme démarreur. Les transmissions hybrides permettent également de charger les batteries du véhicule par la machine électrique fonctionnant en générateur.

Toutefois, les discontinuités de couple appliquées à l'arbre d'entrée de la transmission, notamment en cas de changement de rapport, de démarrage du véhicule, de freinage, d'une forte accélération du véhicule, etc..., ont une forte incidence sur l'accélération du véhicule. En effet, la discontinuité de couple génère des oscillations de la vitesse de rotation de la chaîne cinématique, c'est-à-dire de l'ensemble des éléments tournants qui transmettent la puissance motrice aux roues du véhicule. Ces oscillations de la vitesse de rotation des éléments de la transmission se traduisent par des oscillations de l'accélération du véhicule, et donc par des à-coups du véhicule. Ces à-coups sont ressentis dans l'habitacle du véhicule et constituent un désagrément pour le conducteur et les occupants du véhicule.

Il est connu de mesurer les vitesses de rotation de différents composants de la chaîne cinématique et d'ajuster la consigne de couple du moteur électrique en fonction de la différence entre les vitesses de rotation mesurées et un seuil. Toutefois, de tels systèmes ne sont pas efficaces.

On pourra se référer au document FR 2 910 198 qui décrit un procédé de commande de la correction d'oscillations sur l'arbre de transmission d'un véhicule automobile à propulsion hybride. Ce procédé comprend une étape d'agrément curatif de couple appliquée par une machine électrique. Or, il n'est pas toujours possible de faire intervenir la machine électrique afin de fournir un couple de correction, notamment, par exemple, lorsque le niveau de charge de la batterie du véhicule n'est pas suffisant pour fournir la quantité d'énergie nécessaire à la génération de couple. D'autres procédés de correction d'oscillations sont connus de WO 2014/106709 A1, WO 2014/108620 A1, FR 3 000 993 et FR 2 875 545.

Il existe un besoin d'améliorer les systèmes d'atténuation des vibrations afin qu'il puisse être appliqué dans la majorité des situations de roulage du véhicule.

L'objectif de l'invention est donc de pallier ces inconvénients ci-dessus et de corriger au mieux les oscillations de la vitesse de rotation générées dans la transmission.

L'invention a pour objectif de détecter ces vibrations dans la chaîne cinématique et de les atténuer au maximum.

Selon un premier aspect, l'invention a pour objet un système de correction des oscillations de couple générées dans une transmission d'un véhicule automobile à propulsion hybride tel que défini par la revendication 1.

Avantageusement, le module de supervision comprend un module de sélection de l'actionneur en fonction du niveau de charge de la batterie connectée à la machine électrique, de la température mesurée par des capteurs de température, de l'état de la machine électrique et de l'état de la chaîne cinématique.

Avantageusement, le module de supervision comprend un module d'activation du module de correction des oscillations associé à l'actionneur sélectionné.

Le module de détection d'une oscillation comprend, selon l'invention, deux filtres passe-bas disposés en série pour filtrer la valeur du régime de rotation de l'actionneur sélectionné, afin d'isoler les fréquences dues à l'oscillation générée par un à-coup et d'inverser la phase du signal afin d'être en opposition de phase avec la consigne de commande de couple provenant du signal de commande résultant de l'appui sur la pédale d'accélération par le conducteur du véhicule.

Dans un mode de réalisation, le module de correction comprend un module de calcul d'une consigne de correction en fonction de la valeur filtrée du régime de rotation de l'actionneur sélectionné et d'un gain prédéterminé par le module de supervision.

Dans un mode de réalisation, le module de correction comprend un moyen de calcul d'une consigne de couple corrigée en fonction d'une valeur de couple demandée par le conducteur suite à l'appui sur la pédale d'accélération et ladite consigne de correction et un module de transmission de la consigne couple corrigée à l'actionneur sélectionné.

Selon un deuxième aspect, l'invention concerne un véhicule automobile à propulsion hybride comprenant un moteur thermique, au moins une machine électrique, une transmission mécanique reliée audit moteur thermique, à ladite machine électrique et aux roues du véhicule et un système de correction des oscillations de couple générées dans ladite transmission tel que décrit précédemment.

Dans un mode de réalisation, le véhicule automobile comprend une unité de commande électronique apte à commander le moteur thermique, un onduleur apte à commander la machine électrique et un calculateur général apte à commander à la fois l'unité de commande électronique et l'onduleur. Le module de supervision est intégré directement dans le calculateur général du véhicule automobile et le module de correction des oscillations de couple est intégré directement respectivement dans l'unité de commande électronique et dans l'onduleur, afin d'être au plus proche de l'actionneur préalablement choisi. Il y a donc autant de module de correction que d'actionneur.

Selon un troisième aspect, l'invention concerne un procédé de correction des oscillations dans une transmission d'un véhicule automobile à propulsion hybride tel que défini par la revendication 9.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente schématiquement l'architecture d'un véhicule automobile selon l'invention;
- la figure 2 représente en détails le système de correction des oscillations de la vitesse de rotation de la transmission de la figure 1 ; et
- la figure 3 représente un organigramme d'un procédé de correction des oscillations de la vitesse de rotation de la transmission selon un mode de mise en œuvre de l'invention.

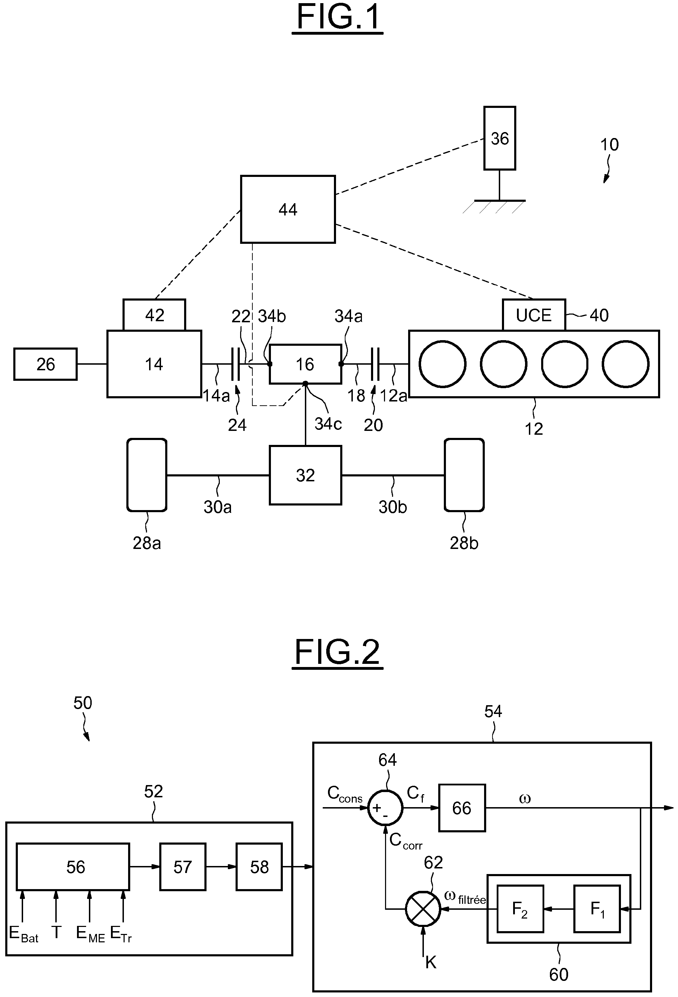

Tel qu'illustré sur la figure 1, un véhicule automobile à propulsion hybride, référencé 10 dans son ensemble, comprend un groupe motopropulseur comportant un moteur thermique 12, une machine électrique 14, une transmission 16 recevant un couple d'un premier arbre d'entrée 18 relié à l'arbre de sortie 12a du moteur thermique 12 par l'intermédiaire d'un premier embrayage 20, et un couple d'un deuxième arbre d'entrée 22 relié à l'arbre de sortie 14a du moteur électrique 14 par l'intermédiaire d'un deuxième embrayage 24, et une batterie 26 connectée au moteur électrique 14.

La transmission 16 comprend une boîte de vitesses, comme par exemple un engrenage planétaire (non représenté) qui distribue le couple à des engrenages à rapport fixe connectés aux roues 28a, 28b du véhicule par un arbre de sortie de couple 30a, 30b. Un mécanisme différentiel 32 peut être placé entre la transmission 16 et l'arbre de sortie 30a, 30b.

Les roues peuvent être les roues avant ou arrière du véhicule hybride.

Des capteurs de vitesse de rotation 34a, 34b, 34c sont placés respectivement sur les premier et deuxième arbres d'entrée 18, 22 et sur l'arbre de sortie de la transmission 16. Le groupe motopropulseur de véhicule hybride 10 comprend en outre un capteur de position de la pédale 36 pour déterminer la consigne de couple C_{cons} demandée par le conducteur.

Le groupe motopropulseur de véhicule hybride 10 comprend une unité de commande électronique (UCE) 40 qui commande le moteur thermique 12 et un onduleur 42 qui commande le moteur électrique 14. Le groupe motopropulseur de véhicule hybride 10 comprend en outre un calculateur général 44, dit en termes anglo-saxons « Hybrid Electric Vehicle Calculator » (HEVC) qui commande à la fois l'unité de commande électronique (UCE) 40, l'onduleur 42 et la transmission 16 en fonction des données fournies par les différents capteurs et la consigne de commande de couple demandée par le conducteur du véhicule.

Comme représenté sur la figure 2, le véhicule automobile comprend un système 50 de correction des oscillations de couple comportant un module 52 de supervision et un module 54 de correction des oscillations de couple.

Le module 52 de supervision est intégré directement dans le calculateur général et comporte un module 56 de sélection de l'actionneur à utiliser qui sera capable d'assurer la correction de couple. L'actionneur est choisi parmi le moteur thermique ou le moteur électrique en fonction du niveau de la batterie E_{bat}, de la température T mesurée par des capteurs de température (non représentés), de l'état de la machine électrique E_{ME} et de l'état de la chaîne cinématique Eₜᵣ. Par défaut, le module de supervision 52 choisira le moteur électrique. En effet, le moteur électrique permet une précision et une réactivité accrue par rapport à celles du moteur thermique. Toutefois, en cas de niveau insuffisant de la batterie, de forte chaleur, de panne de la machine électrique ou lorsque l'état de la chaîne cinématique induit un découplage de la machine électrique de la transmission, le module de supervision choisira le moteur thermique comme actionneur.

Le module 52 de supervision comprend en outre un module 57 de détermination des paramètres des filtres passe-bas et du gain permettant de calculer une valeur de consigne de couple corrective et un module 58 d'activation du module 54 de correction des oscillations de couple.

Le module 54 de correction des oscillations de couple est intégré directement dans chacun des actionneurs, c'est-à-dire dans l'onduleur 42 et dans l'unité de commande électronique 40, afin d'être au plus proche de l'actionneur préalablement choisi.

Tel qu'illustré, le module 54 de correction des oscillations de couple comprend un module 60 de détection d'une oscillation en observant le régime de rotation ω de l'actionneur choisi par le module de supervision.

Le module 60 de détection d'une oscillation comprend deux filtres passe-bas F1, F2 en série afin d'isoler les fréquences dues à l'oscillation générée par un à-coup et d'inverser la phase du signal afin d'être en opposition de phase avec la consigne de commande de couple C_{cons} provenant du signal de commande résultant de l'appui sur la pédale d'accélération par le conducteur du véhicule.

Le module 54 de correction comprend en outre un module 62 de calcul de la consigne de correction C_{corr} en multipliant la valeur filtrée du régime de rotation ω_{filtrée} de l'actionneur choisi par un gain K prédéterminé par le module de supervision.

La consigne de couple corrective C_{corr} vient se soustraire dans un soustracteur 64 à la consigne de couple demandée C_{cons} pour délivrer une consigne de couple corrigée C_{f} à l'actionneur choisi par un module 66 de transmission de la consigne couple corrigée C_{f}.

La correction de couple peut donc être appliquée quelle que soit la situation de roulage du véhicule hybride.

Le signal de correction est transmis au plus près de l'actionneur choisi, c'est à dire à l'onduleur pour le moteur électrique et à l'unité de commande électronique pour le moteur thermique. Ainsi, le décalage entre la mesure de l'oscillation et la production de couple peut être réduit au maximum, afin d'obtenir une correction de l'oscillation la plus efficace possible.

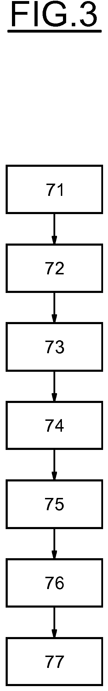

Tel qu'illustré sur la figure 3, le procédé de correction des oscillations dans la transmission comprend une première étape 71 de sélection de l'actionneur à utiliser qui sera capable d'assurer la correction de couple, une deuxième étape 72 de détermination de paramètres à prendre en compte pour calculer une consigne de couple corrective, et une troisième étape 73 d'activation du module 54 de correction de l'actionneur choisi et de transmission des paramètres prédéterminés. Lesdits paramètres déterminés à l'étape 72 sont déterminés, principalement, en fonction du régime de rotation de l'actionneur choisi et de l'état de la chaîne cinématique, tel que par exemple le rapport de la boîte de vitesse sélectionné.

Une fois le module de correction activé directement au plus proche de l'actionneur choisi, le procédé de correction comprend une étape 74 de détection de l'oscillation par observation du régime de rotation de l'actionneur choisi, une étape 75 de filtrage de la valeur mesurée du régime de rotation de l'actionneur choisi et une étape 76 de calcul de la consigne de couple corrective C_{corr} à appliquer à la consigne de couple C_{cons} et une étape 77 de transmission de la consigne de couple corrigée C_{f} à l'actionneur préalablement choisi.

L'invention est applicable à tout véhicule hybride comportant au moins une machine électrique.

Grace à l'invention, les oscillations dans la transmission peuvent être contrées en injectant un couple en opposition de phase directement au niveau des calculateurs dédiés à chacun des actionneurs présents, c'est-à-dire au moteur thermique ou au moteur électrique.

De plus, le contrôle coordonné des composants de la transmission permet de réduire au mieux la consommation énergétique du véhicule et de répondre à des normes de pollution de plus en plus exigeantes.

## Revendications

1. Système (50) de correction des oscillations de couple générées dans une transmission d'un véhicule automobile à propulsion hybride comprenant un moteur thermique (12), au moins une machine électrique (14) et une transmission mécanique (16) reliée audit moteur thermique, à ladite machine électrique (14) et aux roues (28a, 28b) du véhicule, ledit système comprenant :
- un module (52) de supervision apte à sélectionner parmi le moteur thermique ou la machine électrique (12, 14), l'actionneur capable d'assurer la correction de couple, et
- un module (54) de correction des oscillations de couple apte à délivrer une consigne de couple corrigée (C_{corr}) en fonction du régime de rotation (ω) observé en sortie de l'actionneur sélectionné,
**caractérisé en ce que** le module (54) de correction des oscillations de couple est intégré directement dans chacun des actionneurs (12, 14), et comprend un module (60) de détection d'une oscillation comprenant deux filtres passe-bas (F1, F2) en série afin d'isoler les fréquences dues à une oscillation générée par un à-coup et d'inverser la phase du signal.

2. Système (50) de correction des oscillations de couple selon la revendication 1, dans lequel le module (52) de supervision comprend un module (56) de sélection de l'actionneur en fonction du niveau de charge la batterie (E_{bat}) connectée à la machine électrique, de la température (T) mesurée par des capteurs de température, de l'état de la machine électrique (E_{ME}) et de l'état de la chaîne cinématique (Eₜᵣ).

3. Système (50) de correction des oscillations de couple selon la revendication 1 ou 2, dans lequel le module (52) de supervision comprend un module (58) d'activation du module (54) de correction des oscillations associé à l'actionneur sélectionné.

4. Système (50) de correction des oscillations de couple selon l'une quelconque des revendications précédentes, dans lequel lesdits deux filtres passe-bas (F1, F2) disposés en série étant configurés pour filtrer la valeur du régime de rotation (ω) de l'actionneur sélectionné.

5. Système (50) de correction des oscillations de couple selon la revendication 4, dans lequel le module (54) de correction comprend un module (62) de calcul d'une consigne de correction (C_{corr}) en fonction de la valeur filtrée (ω_{filtrée}) du régime de rotation (ω) de l'actionneur sélectionné et d'un gain (K) prédéterminé par le module de supervision (52).

6. Système (50) de correction des oscillations de couple selon la revendication 5, dans lequel le module (54) de correction comprend un moyen de calcul (64) d'une consigne de couple corrigée (C_{f}) configuré pour soustraire ladite consigne de correction (C_{corr}) calculée par ledit module (62) de calcul d'une consigne de correction (C_{corr}) à une valeur de couple demandée (C_{cons}) par le conducteur suite à l'appui sur la pédale d'accélération, ledit module (54) de correction comprend en outre un module (66) de transmission de la consigne de couple corrigée (C_{f}) à l'actionneur sélectionné.

7. Véhicule automobile à propulsion hybride comprenant un moteur thermique (12), au moins une machine électrique (14), une transmission mécanique (16) reliée audit moteur thermique, à ladite machine électrique (14) et aux roues (28a, 28b) du véhicule et un système (50) de correction des oscillations de couple générées dans ladite transmission selon l'une quelconque des revendications 1 à 6.

8. Véhicule automobile selon la revendication 7, comprenant une unité de commande électronique (40) apte à commander le moteur thermique (12), un onduleur (42) apte à commander la machine électrique (14) et un calculateur général (44) apte à commander à la fois l'unité de commande électronique (40) et l'onduleur (42), le module 52 de supervision étant intégré directement dans le calculateur général (44) du véhicule automobile et le module 54 de correction des oscillations de couple étant intégré directement respectivement dans l'unité de commande électronique (40) et dans l'onduleur (42).

9. Procédé de correction des oscillations dans une transmission d'un véhicule automobile à propulsion hybride comprenant un moteur thermique (12), au moins une machine électrique (14) et une transmission mécanique (16) reliée audit moteur thermique, à ladite machine électrique (14) et aux roues (28a, 28b) du véhicule, dans lequel
- on détermine parmi le moteur thermique ou la machine électrique, l'actionneur capable d'assurer la correction de couple,
- on détecte une oscillation dans la transmission par observation du régime de rotation en sortie de l'actionneur sélectionné,
- on filtre à l'aide de deux filtres passe-bas (F1, F2) en série le régime observé afin d'isoler les fréquences dues à l'oscillation générée par un à-coup et d'inverser la phase du signal,
- on calcule une consigne de correction (C_{corr}) en fonction de la valeur filtrée (ω_{filtrée}) du régime de rotation (ω) de l'actionneur sélectionné et d'un gain (K) prédéterminé par le module de supervision (52),
- on calcule une consigne de couple corrigée (C_{f}) en fonction d'une valeur de couple demandée (C_{cons}) par le conducteur suite à l'appui sur la pédale d'accélération et ladite consigne de correction (C_{corr})
- et on transmet la consigne couple corrigée (C_{f}) à l'actionneur sélectionné parmi le moteur thermique et la machine électrique.

## Patentansprüche

1. System (50) zur Korrektur der Drehmomentschwankungen, die in einem Getriebe eines Kraftfahrzeugs mit Hybridantrieb erzeugt werden, der einen Verbrennungsmotor (12), mindestens eine elektrische Maschine (14) und ein mechanisches Getriebe (16), das mit dem Verbrennungsmotor, der elektrischen Maschine (14) und den Rädern (28a, 28b) des Fahrzeugs verbunden ist, umfasst, wobei das System umfasst:
- ein Modul (52) zur Überwachung, das geeignet ist, unter dem Verbrennungsmotor oder der elektrischen Maschine (12, 14) den Aktor auszuwählen, der in der Lage ist, die Drehmomentkorrektur zu gewährleisten, und
- ein Modul (54) zur Korrektur der Drehmomentschwankungen, das geeignet ist, einen korrigierten Drehmomentsollwert (C_{corr}) in Abhängigkeit von der im Ausgang des ausgewählten Aktors beobachteten Drehzahl (ω) auszugeben,
**dadurch gekennzeichnet, dass** das Modul (54) zur Korrektur der Drehmomentschwankungen direkt in jeden der Aktoren (12, 14) integriert ist und ein Modul (60) zur Detektion einer Schwankung umfasst, das zwei Tiefpassfilter (F1, F2) in Reihe umfasst, um die Frequenzen, die durch eine durch einen Ruck erzeugte Schwankung bedingt sind, zu isolieren und die Phase des Signals umzukehren.

2. System (50) zur Korrektur der Drehmomentschwankungen nach Anspruch 1, wobei das Modul (52) zur Überwachung ein Modul (56) zur Auswahl des Aktors in Abhängigkeit vom Ladestand der Batterie (E_{bat}), die an die elektrische Maschine angeschlossen ist, von der von Temperaturfühlern gemessenen Temperatur (T), vom Zustand der elektrischen Maschine (E_{ME}) und vom Zustand des Antriebsstrangs (Eₜᵣ) umfasst.

3. System (50) zur Korrektur der Drehmomentschwankungen nach Anspruch 1 oder 2, wobei das Modul (52) zur Überwachung ein Modul (58) zur Aktivierung des Moduls (54) zur Korrektur der Schwankungen umfasst, das dem ausgewählten Aktor zugeordnet ist.

4. System (50) zur Korrektur der Drehmomentschwankungen nach einem der vorhergehenden Ansprüche, wobei die beiden in Reihe angeordneten Tiefpassfilter (F1, F2) dazu ausgestaltet sind, den Wert der Drehzahl (ω) des ausgewählten Aktors zu filtern.

5. System (50) zur Korrektur der Drehmomentschwankungen nach Anspruch 4, wobei das Modul (54) zur Korrektur ein Modul (62) zur Berechnung eines Korrektursollwerts (C_{corr}) in Abhängigkeit von dem gefilterten Wert (ω_{filtrée}) der Drehzahl (ω) des ausgewählten Aktors und von einer von dem Modul zur Überwachung (52) vorbestimmten Verstärkung (K) umfasst.

6. System (50) zur Korrektur der Drehmomentschwankungen nach Anspruch 5, wobei das Modul (54) zur Korrektur ein Mittel zur Berechnung (64) eines korrigierten Drehmomentsollwerts (C_{f}) umfasst, das dazu ausgestaltet ist, den Korrektursollwert (C_{corr}), der von dem Modul (62) zur Berechnung eines Korrektursollwerts (C_{corr}) berechnet wird, von einem von dem Fahrer nach dem Betätigen des Gaspedals angeforderten Drehmomentwert (C_{cons}) zu subtrahieren, wobei das Modul (54) zur Korrektur ferner ein Modul (66) zur Übertragung des korrigierten Drehmomentsollwerts (C_{f}) an den ausgewählten Aktor umfasst.

7. Kraftfahrzeug mit Hybridantrieb, umfassend einen Verbrennungsmotor (12), mindestens eine elektrische Maschine (14), ein mechanisches Getriebe (16), das mit dem Verbrennungsmotor, mit der elektrischen Maschine (14) und mit den Rädern (28a, 28b) des Fahrzeugs verbunden ist, und ein System (50) zur Korrektur der Drehmomentschwankungen, die in dem Getriebe erzeugt werden, nach einem der Ansprüche 1 bis 6.

8. Kraftfahrzeug nach Anspruch 7, umfassend eine elektronische Steuerungseinheit (40), die geeignet ist, den Verbrennungsmotor (12) zu steuern, einen Wechselrichter (42), der geeignet ist, die elektrische Maschine (14) zu steuern, und einen Hauptrechner (44), der geeignet ist, sowohl die elektronische Steuerungseinheit (40) als auch den Wechselrichter (42) zu steuern, wobei das Modul 52 zur Überwachung direkt in den Hauptrechner (44) des Kraftfahrzeugs integriert ist und wobei das Modul 54 zur Korrektur der Drehmomentschwankungen jeweils direkt in die elektronische Steuerungseinheit (40) und in den Wechselrichter (42) integriert ist.

9. Verfahren zur Korrektur der Schwankungen in einem Getriebe eines Kraftfahrzeugs mit Hybridantrieb, der einen Verbrennungsmotor (12), mindestens eine elektrische Maschine (14) und ein mechanisches Getriebe (16), das mit dem Verbrennungsmotor, der elektrischen Maschine (14) und den Rädern (28a, 28b) des Fahrzeugs verbunden ist, umfasst, wobei
- unter dem Verbrennungsmotor oder der elektrischen Maschine der Aktor bestimmt wird, der in der Lage ist, die Drehmomentkorrektur zu gewährleisten,
- eine Schwankung in dem Getriebe durch Beobachten der Drehzahl im Ausgang des ausgewählten Aktors detektiert wird,
- mithilfe von zwei Tiefpassfiltern (F1, F2) in Reihe die beobachtete Drehzahl gefiltert wird, um die Frequenzen zu isolieren, die durch die durch einen Ruck erzeugte Schwankung bedingt sind, und die Phase des Signals umzukehren,
- ein Korrektursollwert (C_{corr}) in Abhängigkeit von dem gefilterten Wert (ω_{filtrée}) der Drehzahl (ω) des ausgewählten Aktors und von einer von dem Modul zur Überwachung (52) vorbestimmten Verstärkung (K) berechnet wird,
- ein korrigierter Drehmomentsollwert (C_{f}) in Abhängigkeit von einem von dem Fahrer nach dem Betätigen des Gaspedals angeforderten Drehmomentwert (C_{cons}) und dem Korrektursollwert (C_{corr}) berechnet wird
- und der korrigierte Drehmomentsollwert (C_{f}) an den unter dem Verbrennungsmotor und der elektrischen Maschine ausgewählten Aktor übertragen wird.

## Claims

1. System (50) for correcting torque oscillations generated in a transmission of a hybrid-propulsion motor vehicle comprising a combustion engine (12), at least one electric machine (14) and a mechanical transmission (16) connected to said combustion engine, to said electric machine (14) and to the wheels (28a, 28b) of the vehicle, said system comprising:
- a supervision module (52) able to select, out of the combustion engine and the electric machine (12, 14), the actuator capable of providing the torque correction, and
- a torque oscillation correction module (54) able to deliver a corrected torque setpoint (C_{corr}) as a function of the rotational speed (ω) observed at the output of the selected actuator,
**characterized in that** the torque oscillation correction module (54) is integrated directly into each of the actuators (12, 14), and comprises an oscillation detection module (60) comprising two low-pass filters (F1, F2) in series in order to isolate frequencies due to an oscillation generated by a jerk and to invert the phase of the signal.

2. System (50) for correcting torque oscillations according to Claim 1, wherein the supervision module (52) comprises a module (56) for selecting the actuator based on the level of charge of the battery (E_{bat}) connected to the electric machine, on the temperature (T) measured by temperature sensors, on the state of the electric machine (E_{ME}) and on the state of the drivetrain (Eₜᵣ).

3. System (50) for correcting torque oscillations according to Claim 1 or 2, wherein the supervision module (52) comprises a module (58) for activating the oscillation correction module (54) associated with the selected actuator.

4. System (50) for correcting torque oscillations according to any one of the preceding claims, wherein said two low-pass filters (F1, F2) arranged in series are configured to filter the value of the rotational speed (ω) of the selected actuator.

5. System (50) for correcting torque oscillations according to Claim 4, wherein the correction module (54) comprises a module (62) for computing a correction setpoint (C_{corr}) as a function of the filtered value (ω_{filtered}) of the rotational speed (ω) of the selected actuator and of a gain (K) predetermined by the supervision module (52).

6. System (50) for correcting torque oscillations according to Claim 5, wherein the correction module (54) comprises a means (64) for computing a corrected torque setpoint (C_{f}), configured to subtract said correction setpoint (C_{corr}) computed by said module (62) for computing a correction setpoint (C_{corr}) from a torque value (Cₛₑₜₚ) requested by the driver following pressing of the accelerator pedal, said correction module (54) furthermore comprising a module (66) for transmitting the corrected torque setpoint (C_{f}) to the selected actuator.

7. Hybrid-propulsion motor vehicle comprising a combustion engine (12), at least one electric machine (14), a mechanical transmission (16) connected to said combustion engine, to said electric machine (14) and to the wheels (28a, 28b) of the vehicle and a system (50) for correcting torque oscillations generated in said transmission according to any one of Claims 1 to 6.

8. Motor vehicle according to Claim 7, comprising an electronic control unit (40) able to control the combustion engine (12), an inverter (42) able to control the electric machine (14) and a general-purpose computer (44) able to control both the electronic control unit (40) and the inverter (42), the supervision module 52 being integrated directly into the general-purpose computer (44) of the motor vehicle and the torque oscillation correction module 54 being integrated directly into the electronic control unit (40) and into the inverter (42), respectively.

9. Method for correcting oscillations in a transmission of a hybrid-propulsion motor vehicle comprising a combustion engine (12), at least one electric machine (14) and a mechanical transmission (16) connected to said combustion engine, to said electric machine (14) and to the wheels (28a, 28b) of the vehicle, wherein said method comprises
- determining, out of the combustion engine and the electric machine, the actuator capable of providing the torque correction,
- detecting an oscillation in the transmission by observing the rotational speed at the output of the selected actuator,
- filtering the observed speed using two low-pass filters (F1, F2) in series in order to isolate frequencies due to the oscillation generated by a jerk and to invert the phase of the signal,
- computing a correction setpoint (C_{corr}) as a function of the filtered value (ω_{filtered}) of the rotational speed (ω) of the selected actuator and of a gain (K) predetermined by the supervision module (52),
- computing a corrected torque setpoint (C_{f}) as a function of a torque value (Cₛₑₜₚ) requested by the driver following pressing of the accelerator pedal and said correction setpoint (C_{corr})
- and transmitting the corrected torque setpoint (C_{f}) to the actuator selected out of the combustion engine and the electric machine.
